# EUROPEAN PATENT SPECIFICATION

(11) **EP 3 001 910 B1**
(45) Date of publication and mention of the grant of the patent: **15.03.2017**
(21) Application number: 15182998.3
(22) Date of filing: 28.08.2015
(51) Int. Cl.: A23C 19/02, A23C 19/05, A23C 19/076, A23C 19/045, A23C 19/09

(54) **METHOD FOR THE MANUFACTURE OF A CREAM CHEESE**
VERFAHREN ZUR HERSTELLUNG VON FRISCHKÄSE
PROCÉDÉ POUR LA FABRICATION D'UN FROMAGE À LA CRÈME

(30) Priority: 30.09.2014 GB 201417254
(43) Date of publication of application: 06.04.2016
(73) Proprietor: Kraft Foods R&D, Inc., Illinois 60015 (US)
(72) Inventor: SPIEGEL, Thomas, 81737 Munich (DE); PEREZ RODRIGUEZ, Diana, DF 7820 Gustavo A. Madero (MX); FERRAZ, Marco, PR 81450-000 Curitiba (BR); WOLFSCHOON-POMBO, Alan, 81737 Munich (DE); MUXFELDT, Dirk, 81737 Munich (DE)
(74) Representative: Boult Wade Tennant

(56) References cited:
- EP-A1- 2 649 884
- EP-A2- 1 364 583
- WO-A1-2013/186376
- BRIGHENTI M ET AL: "Characterization of the Rheological, Textural, and Sensory Properties of Samples of Commercial US Cream Cheese with Different Fat Contents", JOURNAL OF DAIRY SCIENCE, AMERICAN DAIRY SCIENCE ASSOCIATION, US, vol. 91, no. 12, 1 December 2008 (2008-12-01), pages 4501-4517, XP026955139, ISSN: 0022-0302 [retrieved on 2008-12-01]

## Description

The present disclosure relates to a method for the production of a cream cheese. In particular, the disclosure relates to a method in which a cream cheese precursor is supplemented with a concentrate derived from skimmed milk and an acidic aqueous by-product of a cheese-making process in order to improve the properties of the resulting cream cheese.

Cream cheese is an acidic, uncured cheese made of dairy components including a fat source, preferably a mixture of cream and milk. Typically, in making cream cheese, a dairy food base (such as milk) is mixed with a fat source (such as cream) and followed by a pasteurization step. Before or after the pasteurization step, the cream cheese mix may be homogenized. After these steps, the mix is acidified. Typically, the mix is indirectly acidified by fermentation, which can be initiated by adding a bacterial culture (such as a lactic acid producing culture) to inoculate the mix. The fermentation step can typically take place for at least about 10 hours and, in particular, about 1 to 2 days. Suitable cultures may comprise a lactic starter culture, selected from among mesophilic and thermophilic lactic-acid-producing bacteria, for instance. Typically, the fermentation process yields a final product that is preferable to consumers because of its "culture notes". Culture notes refer to the flavours and/or aromas associated with a fermented cream cheese product. An example of the manufacture of such cream cheeses is set out in EP2269466. As an alternative, the mix may be directly acidified, for example by adding lemon juice, vinegar or a food grade additive such as lactic acid or citric acid.

During the acidification process, the milk becomes acidified to a point where the casein in the milk precipitates out. This coagulation produces curds, which eventually become the cream cheese, and acid whey, which is the liquid portion that contains water, lactose, whey proteins and salt/minerals. The curds and whey are not necessarily individually discernible at this point. Indeed, the coagulation typically produces a gelled sour mix, which is made up of curds and whey.

A separation step is employed to remove at least some of the moisture from the gelled sour mix. In some cases, the curds are at least partially separated from the acid whey. This is the case where the separation step involves a centrifugation process. By contrast, where a membrane filtration step is employed to remove moisture, this does not necessarily involve removal of whey proteins. The distinction lies in the fact that centrifugation separates components in accordance with their density, whereas membrane filtration separates in accordance with molecular size. When using these types of separation process, a loss of flavour can occur upon the removal of the acidic phase from the curd phase. After the separation step, the mixture may be homogenized, resulting in the final cream cheese product.

As discussed in US7611743, after the amount of whey has been reduced, stabilisers, salt and other ingredients may be added. The controlled removal of the whey allows for the selection of the desired water content in the final product.

Various processed dairy derivatives are known to modify the flavour and/or texture of cream cheese products. These derivatives include, for example, milk protein concentrate, total milk protein concentrate, whey protein concentrate, casein and the like. Milk protein concentrate, for example, may be produced by ultrafiltration and/or microfiltration of milk. Such additives can be added to the cream cheese product, or introduced during preparation of the product.

WO2014/205340 discloses a high protein cream cheese composition having organoleptic characteristics of cream cheese with lower amounts of protein. The cream cheese composition may generally include about 8 to about 20 percent total protein provided from a cheese curd, a cultured dairy liquid, and one or more high protein powders.

US4518616 discloses a process for the recovery of whey proteins and their utilization in cheese making. Whey separated from cheese curd during normal processing is first pasteurized and then subjected to ultrafiltration to provide a whey protein concentrate. The concentrate is mixed with milk and the thus enriched milk is subjected to further ultrafiltration after which it is treated in the usual manner to form a curd. Cheese-making includes fermentation of the enriched curd product of the above process.

EP2649884 discloses a process for producing cream cheese. This document discloses a method comprising the steps of preparing a milk blend, subjecting the milk blend to fermentation, and preparing cream cheese from the fermented milk blend, wherein a casein-enriched milk fraction is used in the preparation of the milk blend.

There is a desire for an improved method for the manufacture of cream cheese, or at least a method that will mitigate some of the problems associated with the prior art or provide a useful alternative thereto.

According to a first aspect, the present disclosure provides a method for the manufacture of a cream cheese, the method comprising:
providing a milk- and cream-containing dairy composition;
fermenting the milk- and cream-containing dairy composition to form a mixture of curds and whey;
forming a concentrated mixture by removing at least an aqueous portion from the mixture of curds and whey;
forming a cream cheese from the concentrated mixture;
the method further comprising obtaining a retentate by ultrafiltrating and/or microfiltrating a mixture of skimmed milk and an acidic aqueous by-product of a cheese-making process, and:
   a) supplementing the milk- and cream-containing dairy composition with at least a portion of the retentate; and/or
   b) supplementing the concentrated mixture with at least a portion of the retentate.

The use of the retentate as an additive in this manner provides a means of increasing the protein content of the cream cheese product, improving its firmness without necessitating a higher fat content. While it is known in the art to use milk protein concentrate as an additive to increase the protein content of a cream cheese, the present inventors have found that this can lead to off-flavours where a certain level of protein enrichment is exceeded prior to fermentation. Surprisingly, it has been found that by adding the retentate of the present disclosure, rather than a milk protein concentrate made only from skimmed milk at neutral pH, it is possible to reduce the off-flavours and provide an improved taste, without compromising the texture of the cream cheese. In addition, and as will be explained below, it is considered necessary in the field of cream cheese manufacture to have a certain level of fat to facilitate centrifugal separation of the curds and whey. Surprisingly, the present inventors have shown that it is possible to produce a "light" cream cheese having a fat content that is sufficiently lower than that of conventional cream cheeses, without compromising the firmness.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The present disclosure relates to a method for the manufacture of a cream cheese. Cream cheese is a well-known foodstuff. It is a soft, mild-tasting cheese, often with a high fat content. Traditionally, it is made from whole milk enriched with additional cream. Cream cheese is not naturally matured and is meant to be consumed fresh, unlike other soft cheeses. Cream cheese is often spread on bread, bagels, crackers, etc., and used as a dip for potato chips and similar snack items, and in salads.

The method of the present disclosure involves a number of steps. As will be appreciated, while these steps are intended to be sequential, there may be some overlap between the steps when the process is carried out in a continuous manner.

The first step involves providing a milk- and cream-containing dairy composition. A dairy composition is a composition obtained from the milk of mammals, typically cows. Examples of dairy compositions include whole milk, skimmed milk, cream, whipped cream, and the like. Furthermore, dairy compositions will typically include whey protein, casein and/or lactose. As such, the definition includes dairy derivatives such as milk protein concentrate, total milk protein concentrate, whey protein concentrate, casein and the like. Whole milk contains at least 3 wt% fat. Cream contains at least 10 wt% fat, and preferably between 25 wt% and 45 wt% fat. The remaining portion of the milk, once the high-butterfat phase has been removed, is referred to as skimmed milk. The fat content of skimmed milk is less than 0.3 wt%. The milk- and cream-containing dairy composition may optionally be concentrated before use, such as by ultrafiltration or evaporation.

A further step of the process involves fermenting the milk- and cream-containing dairy composition to form a mixture of curds and whey. Fermentation, in the context of the present application, refers to lactic acid fermentation, a biological process by which glucose, other six-carbon sugars and disaccharides such as sucrose or lactose are converted into cellular energy and the metabolite lactic acid. It is an anaerobic fermentation reaction that occurs in lactic acid-producing bacteria. These bacteria may be mesophilic, that is to say, they grow best at moderate temperatures, typically between 15 and 30 ºC. Alternatively, these bacteria may be thermophilic, that is to say, they grow best at relatively high temperatures, between 35 and 55 ºC. The most widely used genus of lactic acid-producing bacteria is Lactobacillus. Suitable strains of lactic acid-producing bacteria are commercially available.

Preferably the fermentation step of the present process involves adding lactic acid-producing bacteria to the milk- and cream-containing dairy composition, preferably wherein the lactic acid producing bacteria are selected from the group consisting of mesophilic and thermophilic lactic acid producing bacteria.

Preferably the step of fermenting the milk- and cream-containing dairy composition to form a mixture of curds and whey is carried out for a period of least about 10 hours, preferably from about 1 to 2 days. Generally, the lower the temperature of the fermentation step, the longer the required fermentation time. For example, the fermentation step may be carried out for 15-30 hours at 18-25 ºC to reach a pH of 4.3-4.9.

The preparation of curds in the manufacture of cream cheese is well known: the curds are the solids that separate from the liquid component on concentration of an acidified milk/cream mixture. The curds result from the tangling of casein proteins from the milk into solid masses, and contain milk protein as well as fat from the milk. Discernible curds and whey do not necessarily form as a result of the acidification. Rather, acidification may give rise to a gelled sour mix, which is made up of curds and whey. The curds and whey may only become discernible as a result of the subsequent separation step.

The remaining liquid, typically the whey, is an aqueous composition comprising lactose, whey proteins and minerals depending on the separation process used. Whey may be categorised, depending on its pH, as either "sweet whey" or "acid whey". "Acid whey" means the whey resulting from a cheese-making process that includes the culturing of lactic acid-producing bacteria in a milk composition, wherein the whey as separated has a pH of 5.1 or lower, preferably from 3.8 to 4.6. Acid whey is produced during the manufacture of "acid" types of dairy products such as cottage cheese, quark, ricotta and Petit Suisse. "Sweet whey" refers to whey resulting from a cheese-making process that includes the addition of rennet to a milk composition, wherein the whey as separated has a pH of 5.2 or higher, preferably between 5.2 and 6.7. Sweet whey is produced during the manufacture of "rennet" types of hard cheese such as cheddar or Swiss cheese.

Preferably the acid whey of the present disclosure has a pH of 5.1 or lower, more preferably from 3.8 to 4.6.

Preferably the milk- and cream-containing dairy composition is pasteurised and/or homogenised prior to the step of fermenting the milk- and cream-containing dairy composition. Pasteurisation is a well-known process in the art. It involves heating a food composition to a specific temperature for a predefined length of time and then immediately cooling it after it is removed from the heat. This process slows spoilage caused by microbial growth in the food. Unlike sterilisation, pasteurisation is not intended to kill all micro-organisms in the food. Instead, it aims to reduce the number of viable pathogens so they are unlikely to cause disease. Pasteurisation is often used in cream cheese manufacture to ensure that in the subsequent fermentation step, it is only the added lactic acid-producing bacteria that are fermented, rather than bacteria still present from the initial dairy composition.

Homogenisation is a process used to ensure the homogeneity of two immiscible liquids. It is well known to homogenise dairy compositions to ensure that the fat content is evenly distributed in the aqueous portion of the composition, preventing a cream layer from forming on the top of the composition. Homogenisation breaks the fat into smaller sizes so it no longer separates, allowing the sale of non-separating milk at any fat specification. Homogenisation may be a one-stage high pressure process, for example at a pressure of 100-200 bar depending on the initial fat content. Alternatively, homogenisation may be a two-stage homogenization.

In a further step of the process, a concentrated mixture is formed by removing at least an aqueous portion from the mixture of curds and whey. Preferably this step comprises subjecting the mixture of curds and whey to centrifugation or membrane filtration. Both of these process technologies are well known in the art.

Centrifugation involves the use of a centrifugal force for the sedimentation of heterogeneous mixtures with a centrifuge. More dense components of the mixture migrate away from the axis of the centrifuge, while less dense components of the mixture migrate towards the axis. During the centrifugal separation of curds and whey, the fat and protein components (which make up the curd) are less dense and migrate toward the axis, while the more dense aqueous whey phase migrates away from the axis. As will be appreciated, the rate and duration of centrifugation can be varied to achieve the desired extent of separation of the curds and whey.

Furthermore, these parameters depend on the composition of the initial dairy mix, in particular the absolute content and ratio of protein and fat. For example, a high fat and protein dairy mix will produce only a small amount of whey. Indeed, the fat and protein content may be so high that only a minimal amount of whey, or even substantially no whey, will need to be removed to create the concentrated mixture. When centrifugation is used as the separation technique, the aqueous portion is usually referred to as acid whey.

Similar considerations apply where membrane filtration is used to form the concentrated mixture. Upon fermentation, a gel-like, thick mixture is typically obtained. Accordingly, it is desirable to use a membrane filter having a relatively small pore size in order to achieve the desired separation, for example, UF 10 kDa - MF 0.1 µm. When membrane filtration is used, the aqueous portion is usually referred to as acid permeate. This does not necessarily comprise whey.

The next step of the present process involves forming a cream cheese from the concentrated mixture. Preferably the step of forming a cream cheese from the concentrated mixture comprises pasteurising and/or homogenising and/or texturising the concentrated mixture. As will be appreciated from the above, homogenisation provides an even distribution of fat and other components throughout the cream cheese. Texturisation is a well-known process in the art of cream cheese manufacture. It involves heating a food composition to a specific temperature and holding it at that temperature under shear in order to control the texture of the food product. It is typically found that the application of this procedure to dairy products typically leads to an increase in firmness of the dairy product. While the precise molecular mechanism for this change is unknown, it is thought to relate to the reorganisation of fat and protein globules to give a more stable structure.

Preferably the step of texturising the concentrated mixture (optionally comprising additional ingredients such as stabilisers as described below) is carried out for a period of from 10 to 80 minutes, more preferably from 15 to 70 minutes, still more preferably from 30 to 60 minutes and most preferably from 40 to 50 minutes. Alternatively or in addition, the step of texturizing the concentrated mixture may be carried out at a temperature of from 70 to 85 ºC, more preferably from 73 to 80 ºC and most preferably about 75 ºC. As explained below, surprisingly, a concentrated mixture that has been supplemented with an additive in accordance with the present disclosure is able to undergo more effective texture building than a conventional concentrated mixture.

Preferably, in the step of forming a cream cheese from the concentrated mixture, stabilisers and/or salt are added to the concentrated mixture, preferably wherein the stabilisers are selected from the group consisting of carob bean gum, carrageenan, locust bean gum, alginate, xanthan, gelatine, gum arabic, agar-agar, pectin, cellulose gum, carboxy methyl cellulose, and mixtures of two or more thereof.

The method involves the use of an additive made from milk and an acidic aqueous by-product of a cheese-making process. This acts as a solids supplement. In particular, the additive is a retentate obtained by ultrafiltrating and/or microfiltrating a mixture of skimmed milk and an acidic aqueous by-product of a cheese-making process. Ultrafiltration is a well-known process in the art. Ultrafiltration (UF) is a variety of membrane filtration in which conditions, such as pressure or concentration gradients, lead to a separation through a semipermeable membrane. Suspended solids and solutes of high molecular weight are retained in the so-called retentate, while water and low molecular weight solutes pass through the membrane in the permeate. Ultrafiltration is not fundamentally different from microfiltration, nanofiltration or membrane gas separation, except in terms of the size of the molecules it retains.. As will be appreciated, the ultrafiltration and/or microfiltration step may be combined with other concentration techniques such as nanofiltration, reverse osmosis and evaporation.

The acidic aqueous by-product used to form the additive is a by-product of a cheese manufacturing process, more preferably wherein the cheese is selected from the group consisting of cottage cheese, quark, ricotta and Petit Suisse. Preferably, the acidic aqueous by-product of a cheese-making process is an acid whey. As explained above, acid whey may be sourced from any cheese-making process that includes the culturing of lactic acid-producing bacteria in a milk composition. Acid whey may alternatively or additionally be sourced from the production of caseinate or traditional Greek-style yoghurt.

Alternatively or additionally, at least a portion of the acidic aqueous by-product used to form the additive is the aqueous portion obtained from the step of forming a concentrated mixture in the present process. As explained above, this aqueous portion may comprise, or consist of, acid whey or acid permeate depending on the applied separation method. Where the aqueous portion is or comprises acid whey , this has the advantage of providing an integrated process for the recycling of acid whey. This also provides the advantage that no further additives need to be mentioned on the product label.

Irrespective of the source of the acid whey, its utilisation in the present process in certain embodiments contrasts with conventional cheese manufacturing processes in which the acid whey is typically discarded. While it is known to further process acid whey, for example to make whey protein concentrate or isolate, it is still frequently disposed of as waste. This disposal is fraught with environmental problems, as acid whey becomes harmful to the natural environment as it decomposes. Thus, the present process advantageously reduces the environmental impact associated with acid whey disposal from cheese-making processes.

Preferably the mixture of skimmed milk and an acidic aqueous by-product before ultrafiltration and/or microfiltration has a ratio of skimmed milk to acidic portion of from 1:1 to 10:1, more preferably from 2:1 to 3:1, still more preferably about 7:3.

Preferably the mixture of skimmed milk and acidic aqueous by-product before ultrafiltration and/or microfiltration has a pH of from 5.5 to 6.5, more preferably from 5.8 to 6.2, and still more preferably about 6.0. The reduction of the pH of the skimmed milk by acidification using the acidic aqueous by-product provides a means of reducing calcium levels in the subsequently formed retentate without the use of additives or additional processes, such as citrates/phosphates, ionexchange, electrodialysis and the like. The pH of the mixture is determined by the relative proportions of skimmed milk and acidic aqueous by-product. Preferably a solids content of the retentate is increased relative to the solids content prior to ultrafiltration and/or microfiltration by from 100% to 400%, more preferably by from 200% to 300%, still more preferably by from 330 to 370%, and most preferably by about 350%. The extent to which the skimmed milk-acidic aqueous by-product mixture is concentrated is to be determined in accordance with the desired solids content of the retentate, which in turn is matched to the desired properties of the final cream cheese. The solids content of the mixture depends on both the ratio of skimmed milk to acidic aqueous by-product and the source of the acidic aqueous by-product.

Preferably the retentate has a protein content of from 3.5 to 15 wt%, more preferably from 8 to 12 wt%.

As explained above, at least a portion of the retentate of the present disclosure may be used as an additive in the claimed cream cheese manufacturing process. This provides a means of increasing the protein and solids in the cream cheese product, improving its firmness without requiring a higher fat content (which is undesirable for nutritional reasons). Where the acidic aqueous by-product is or comprises acid whey, this increases the protein content of the retentate further due to the whey proteins, thus enabling an even firmer cream cheese to be obtained without requiring increased fat.

While it is known in the art to use milk protein concentrate as an additive to increase the protein content and therefore the firmness of the resulting cream cheese, the present inventors have found that this can lead to off-flavours, which are undesirable from the consumer's perspective. These off-flavours tend to develop where a certain level of protein enrichment is exceeded prior to fermentation. Surprisingly, the present inventors have found that by adding the retentate of the present disclosure, rather than a conventional milk protein concentrate prepared only from skimmed milk at neutral pH, it is possible to reduce the off-flavours and thus provide an improved taste. It is thought that this is due to a higher solubility of calcium ions in the mixture than in skimmed milk alone, owing to the lower pH of the former. This means that upon ultrafiltration or microfiltration of the mixture, the permeate has a greater calcium ion concentration than would be obtained from the ultrafiltration/microfiltration of skimmed milk alone. Accordingly, the retentate, which is used as an additive, has a lower calcium ion concentration. This results in reduced calcium-related bitterness or metallic taste in the final cream cheese product. As stated above, sourcing the acidic aqueous by-product from a cheese manufacturing provides a "clean label" product which would not be the case if mineral acids or organic acids were used to such an effect.

In particular, at least a portion of the retentate of the present disclosure may be used to supplement the milk- and cream-containing dairy composition. As explained above, this increases the protein concentration of the initial dairy mix , thereby giving a higher yield and firmness of the finished product without increasing its fat content. Again, this effect is even more pronounced when acid whey is used to form the retentate. As will be apparent from the Examples, the present inventors have shown that by adding the retentate of the present disclosure, the concentrated mixture is able to undergo more effective texture building than a conventional concentrated curd portion. Indeed, the use of a texturising step, as described above, results in a firmer-than-expected cream cheese product.

When the method comprises the step of supplementing the milk- and cream-containing dairy composition with at least a portion of the retentate, the milk- and cream-containing dairy composition preferably has a ratio of milk to cream of from 1:2 to 2:1, more preferably of about 1:1. This ratio is to be determined in accordance with creaminess and firmness desired in the final cream cheese product. As such, the cream cheese may, alternatively or in addition, have a total solids content of from 30 to 45 wt%, more preferably of from 32 to 38 wt%. Alternatively or in addition, the cream cheese may have a fat content of from 15 to 30 wt%, more preferably of from 20 to 25 wt%. As will be seen from the Examples, the present inventors have demonstrated that it is possible to produce a cream cheese having a lower fat content than conventional cream cheese, without compromising the firmness.

When the method comprises the step of supplementing the milk- and cream-containing dairy composition with at least a portion of the retentate, the milk- and cream-containing dairy composition is preferably supplemented with the at least a portion of the retentate in an amount such as to decrease the pH of the composition to from 6.0 to 6.6, more preferably to from 6.2 to 6.4. It has been found that tuning the pH in this manner achieves the best improvement in properties of the resulting cream cheese relative to cream cheese produced from a conventional process.

Alternatively or in addition, the method may comprise a step of supplementing the concentrated mixture with at least a portion of the retentate. In the same manner as the above embodiment, this increases the solids and protein content of the resulting cream cheese, and therefore its firmness, without increasing the fat content. Indeed, the present embodiment facilitates the preparation of a "light" cream cheese having a much lower fat content than that of conventional cream cheeses.

Due to an increasing drive towards healthier food products, it is desirable to provide cream cheese products having a lower fat content. However, the present inventors have found that when the fat content of the initial dairy mix is too low, the resulting density difference between the curd and the aqueous phase is too low to separate these phases by means of centrifugation, and thus it is only possible to form a suitable cream cheese product if a membrane separation process is used. It has been found that by adding the retentate of the present disclosure to the concentrated mixture, it is possible to decrease the fat content of the resulting cream cheese without compromising its firmness. As such, it is possible to use a higher fat concentration in the initial dairy mix, thus enabling at least partial separation of curds and whey by centrifugation, as the fat content of the final product can be decreased by adding fermented retentate to the whey-reduced mixture. As explained above, this also avoids the calcium-related bitterness in the final product that would have been induced had milk protein concentrate been used as the additive at high levels. The present disclosure therefore provides a means of producing a light, healthy cream cheese having the same texture and other attributes associated with cream cheese to which consumers have grown accustomed.

In this embodiment, the at least a portion of the retentate is preferably fermented prior to the step of supplementing the concentrated mixture. Advantageously, this contributes to the pleasant, acidic, cultured taste of the concentrated mixture and allows a further increase in firmness of the cream cheese product. This is because coagulated proteins, which arise from the fermentation step, contribute better to texture-building than soluble proteins.

When the method comprises the step of supplementing the concentrated mixture with at least a portion of the retentate, the milk- and cream-containing dairy composition preferable has a ratio of milk to cream of from 7:1 to 10:1, more preferably of from 8:1 to 9:1. Alternatively or in addition, the cream cheese may have a total solids content of from 20 to 35 wt%, more preferably of from 24 to 28 wt%. Alternatively or in addition, the cream cheese may have a fat content of from 8 to 20 wt%, more preferably of from 10 to 15 wt%. It should be noted that these milk to cream ratios are higher, and total solids and fat contents lower, than those derived above. This is because this embodiment is generally directed towards the preparation of a "light", low fat cream cheese, which, as explained above, is difficult to accomplish using conventional methods. Nevertheless, this embodiment could also be used to produce full fat cheeses.

Preferably the acidic aqueous by-product of a cheese-making process is not concentrated before combining with the skimmed milk to form the mixture before ultrafiltrating and/or microfiltrating to form the retentate.

Preferably the method further comprises packaging the cream cheese.

All aspects disclosed in relation to the first aspect can be used in combination with the third aspect. As will be appreciated, the concentrated mixture of the first aspect is instead the mixture of curds and whey in the third aspect.

Unless otherwise stated, all percentages herein are by weight.

### Figures

The present disclosure will be described in relation to the following non-limiting figures, in which:
Figure 1 is a flowchart illustrating the different steps of one embodiment of the method for producing a cream cheese as described herein.
Figure 2 is a graph illustrating how the firmness of a cream cheese produced in accordance with the present method varies over the course of a texture build-up process at 75 ºC, in comparison with a cream cheese produced by a conventional method. The diamonds are the standard mixture, and the squares show the product produced according to the method described herein.
Figure 3 is a flowchart illustrating the different steps of a second embodiment of the method for producing a cream cheese as described herein.
Figure 4 is a bar chart showing the results of Example 6.

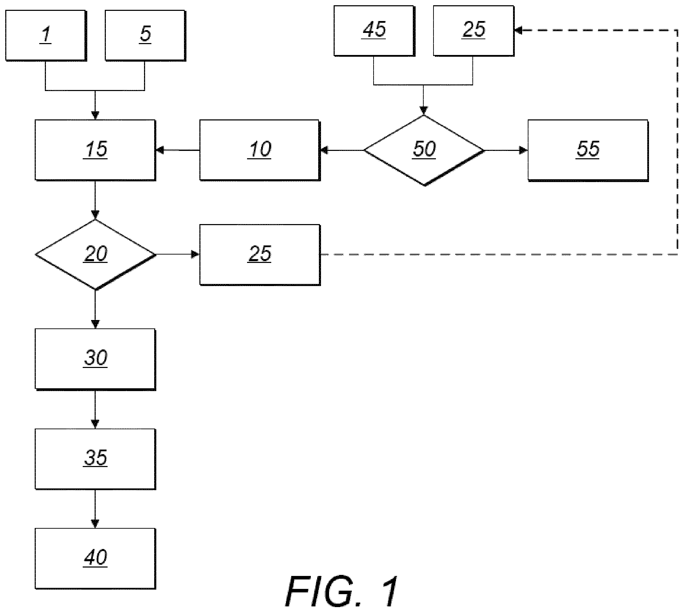

The method shown in Figure 1 involves the following steps:
Milk 1 and Cream 5 are combined and a UF concentrate 10 is then added. The combined mixture is subjected to a series of first processing steps 15 of mix standardisation, homogenisation, pasteurisation and fermentation.

The processed mixture is then passed to a centrifuge 20 and centrifuged to remove an acid whey 25. The remainder is subjected to a powder addition step 30 for the introduction of powdered ingredients, then subjected to second processing steps 35 of heating, homogenisation and texture building, followed by packaging steps 40 of filling, cooling and storage.

The removed acid whey 25 is blended with pasteurised skim milk 45 in a ratio of 70:30 milk 45 to acid whey 25. The blend is then subjected to ultrafiltration 50 to produce the UF concentrate 10 and a UF permeate 55.

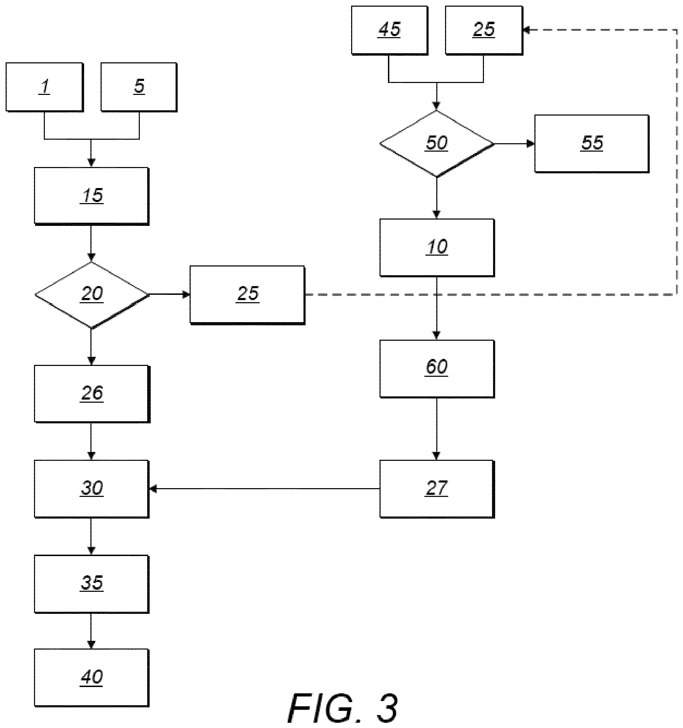

The method shown in Figure 3 involves the following steps:
Milk 1 and Cream 5 are combined. The combined mixture is subjected to a series of first processing steps 15 of mix standardisation, homogenisation, pasteurisation and fermentation.

The processed mixture is then passed to a centrifuge 20 and centrifuged to remove an acid whey 25 and a cream cheese curd 26 which is subjected to a powder addition step 30 for the introduction of powdered ingredients. An acidified UF concentrate 27 is added to the cream cheese curd 26 around this point in the process.

The supplemented cream cheese curds are then subjected to second processing steps 35 of heating, homogenisation and texture building, followed by packaging steps 40 of filling, cooling and storage.

The removed acid whey 25 is blended with pasteurised skim milk 45 in a ratio of 70:30 milk 45 to acid whey 25. The blend is then subjected to ultrafiltration 50 to produce a UF concentrate 10 and a UF permeate 55. The UF concentrate 10 is then subjected to a fermentation step 60 to produce the acidified UF concentrate 27.

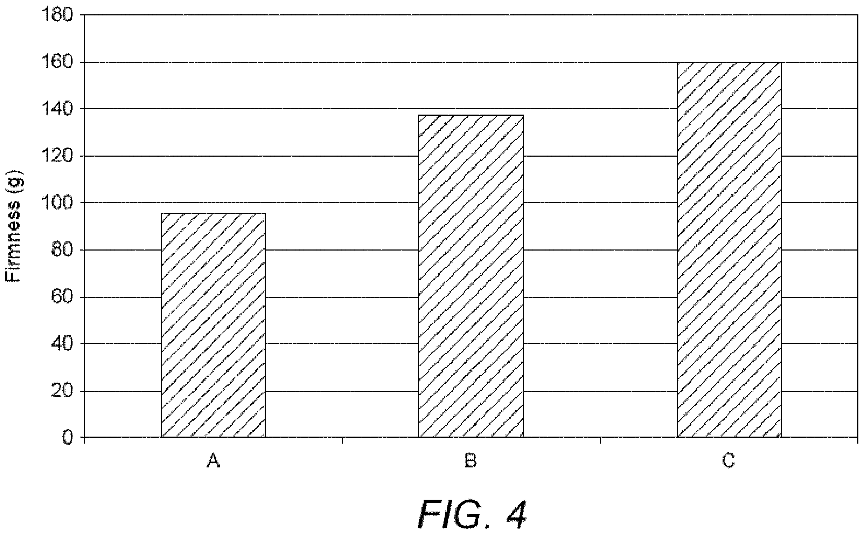

Figure 4 is a bar chart depicting the firmness of various cream cheeses from UF concentrates. A relates to skim milk UF concentrate. B relates to a UF concentrate of 70:30 skim milk: acid whey blend. C relates to a UF concentrate of 60:40 skim milk: acid whey blend.

### Examples

The present disclosure will now be described in relation to the following non-limiting examples.

### Example 1

A 7:3 mixture of pasteurized milk and acid whey was prepared. This was then concentrated 3.45 times by ultrafiltration. The retentate had 15.0% of total solids, 9% of protein and a pH of 6.25. The corresponding permeate from this operation had a pH of 6.05, 5.9% of total solids and a calcium content of 0.050%. The permeate from a conventional skimmed milk ultrafiltration process was found to have a calcium content of only 0.030%. Thus, greater calcium solubilisation was achieved in the present process, giving a retentate having a lower calcium content than would be achievable from a conventional skimmed milk ultrafiltration process.

### Example 2

A blend was prepared by mixing approximately 44% of raw whole milk, approximately 44% of cream, and approximately 12% of the retentate of Example 1. This mixture was then pasteurized, homogenized and inoculated with mesophilic cultures. Mesophilic cultures are lactic acid producing cultures, and are conventionally used in cream cheese production.

This fermented mixture was then used to prepare a cream cheese product by the following steps:
Heat treatment
Centrifugal separation of curd from acid whey
Addition of salt and stabilizers
Heating and homogenization of the curd cheese
Texturizing reaction to build firmness
Filling and cooling

The above-described steps are illustrated by Figure 1.

The resulting cream cheese had a total solids content of ∼36.5%, fat ∼26% and protein ∼5.8%, with a pH of 4.76. By way of comparison, a standard full fat cream cheese, produced without the addition of the above-described retentate, typically has a total solids content of 40%, fat 29.4% and protein 5.6%, with a pH of ∼4.80.

The texturizing step involves stirring the homogenised curd at a constant temperature (typically in the range of 75-85 ºC). A prototype cream cheese product in accordance with the present Example was subjected to such a step at 75 ºC and its Stevens firmness was monitored over time. The standard full fat cream cheese described above was used as a comparison.

The Stevens firmness (g) is the peak positive load attained in a full cycle, a measurement of the force required to attain a given deformation. The measurements were conducted with a Stevens LFRA TA 1000 Texture Analyser and CNS Farnell LFRA TA 1000 computer interface kit. The Stevens LFRA Texture analyser consists of a bi-directional load cell and probe that are driven by a stepping motor, to enable linear travel. A probe of known geometry compresses/penetrates the sample material at a pre-selected speed and distance. The Stevens Analyser records the force resisting the probe movement and generates a force-deformation curve, from which required information be derived in a conventional manner.

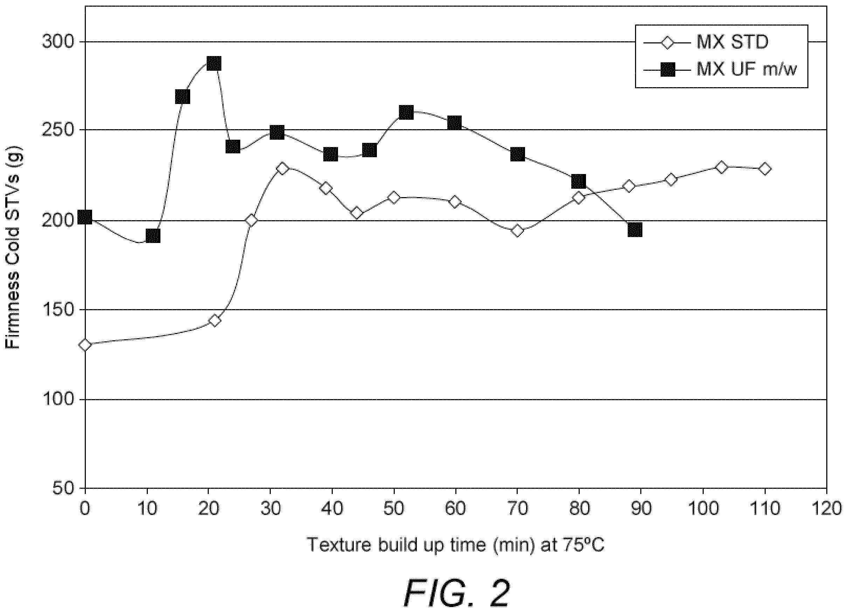

As can be seen from Figure 2, both the cream cheese produced in accordance with the present disclosure and the conventional cream cheese experienced a significant increase in firmness after 10-20 minutes. In addition, throughout the first 80 minutes of the procedure, the cream cheese produced in accordance with the present disclosure has a greater firmness than the conventional cream cheese at a given time. Thus, by using the skimmed milk/acid whey concentrate as an additive in a cream cheese manufacturing process, it is possible to produce a cream cheese having a greater firmness than one produced by conventional methods, despite its reduced fat content.

### Example 3

A "light" cream cheese (*i.e.* one having a significantly lower fat content than that of conventional cream cheeses) was produced as follows.

85% whole milk was mixed with 15% cream to produce a dairy composition having a fat content of 8%. The dairy composition was homogenised at 200 bar, pasteurised at 83 ºC for 120 seconds, and then fermented with lactic bacteria to pH 4.65, forming a mixture of curds and whey. A separation step was carried out at 76 ºC to give a concentrated mixture having 32.6% total solids, 19.7% fat, 7.7% protein (concentration factor = 2.5).

A mixture of acid whey and skimmed milk was concentrated by ultrafiltration (as in Example 1) and additionally fermented to give a fermented UF-concentrate having 15% total solids, 9% protein and pH 4.9. 33% fermented UF-concentrate was added to the above-described curd, together with salt and stabilizers.

The supplemented concentrated mixture was then homogenized at 350 / 70 bar, followed by texture building at 78-80 ºC for 45 minutes to form the light cream cheese product. The finished product has 27.0% total solids, 13.5%fat and 7.5% protein. Supplementing the whey-reduced mixture with the UF-concentrate allows a reduction in fat content of the final product, meaning that sufficient fat can be used in the earlier stages to allow centrifugal separation of the curds and whey.

### Example 4

A blend of skim milk and acid UF permeate (mixing ratio ∼65:35, pH 5.98, 8% solids) was 3.5 - 4x concentrated with microfiltration membranes (0,1 µm pore size). The resulting retentate had about 16.7% total solids, 10.9% total protein, 0,3% fat and 0.37% calcium. This retentate (51 parts) was blended with cream containing 40% fat (49 parts), heated, homogenized, cooled to incubation temperature and fermented with lactic acid bacteria in the presence of rennet. No further separation step was needed in this case. Afterwards, the fermented and coagulated mix was heated, blended with salt and stabilizer, homogenized and subjected to a texturizing step at 80°C for 50 min and finally filled into tubs. The finished cream cheese had 32.2% total solids, 19.9% fat, and 6.9% total protein. This cheese showed good sensory properties.

### Example 5

This is an example of the preparation of milk protein concentrates from skim milk and skim milk / acid whey blends (ratio 70:30 and 60:40).

Ultrafiltration was performed at 15°C, transmembrane pressure of 1 bar and a molecular cut-off of 10kDa. The permeate flux was comparable at the end of the filtration process for all three runs. No flocculation was observed. When the pH of the starting material decreases from 6.71 (regular milk) to 6.15 (70:30 blend) and 6.03 (60:40 blend), the soluble calcium increases from 360 mg/kg (milk permeate) to 590 mg/kg (70:30 permeate) and 720 mg/kg (60:40 permeate) respectively.

| Sample | TS (%) | Protein (%) | Fat (%) | Ca mg/kg | pH |
|---|---|---|---|---|---|
| Acid Whey | 5,9 | 0,3 | 0,1 | 1180 | 4,75 |
| Skim Milk | 9,3 | 3,5 | 0,1 | 1220 | 6,71 |
| 3.5 x UF-Concentrate Skim Milk | 20,8 | 14,8 | 0,4 | 4350 | 6,62 |
| Permeate from Skim Milk | 5,3 | 0,1 | 0,0 | 360 | 6,81 |
| Blend Skim Milk : Acid Whey 70:30 | 8,2 | 2,4 | 0,1 | 1210 | 6,15 |
| 5 x UF-Concentrate 70:30 | 20,0 | 13,8 | 0,5 | 4270 | 6,08 |
| Permeate from 70:30 | 5,1 | 0,1 | 0,0 | 590 | 6,23 |
| Blend Skim Milk : Acid Whey 60:40 | 7,8 | 2,1 | 0,1 | 1210 | 6,03 |
| 5 x UF-Concentrate 60:40 | 19,9 | 13,6 | 0,6 | 4050 | 5,97 |
| Permeate from 60:40 | 5,4 | 0,1 | 0,0 | 720 | 6,04 |

### Example 6 (not in accordance with the invention)

This is an example of the preparation of model cream cheese products without whey separation.

Model full fat cream cheese was prepared by blending 35% cream (30% fat) with 65% of the milk protein concentrates (from Example 5), pasteurizing the blends at 80°C, cooling down to 20-22°C, adding lactic cultures, and fermenting until a pH of around 4.65 was obtained. The fermented milk blends were heated to 70°C, salt and locust bean gum were added and a homogenizing step was conducted at 300 bar. The homogenized products were stirred at 80°C for about 30 min and filled into plastic tubs. The final composition of the three cheeses varied in the following ranges:

| | |
|---|---|
| Total solids: | 34.0% ± 0.5% |
| Fat: | 21.0% ± 0.5% |
| Protein: | 6.9% ± 0.2% |
| Lactose: | 3.0% ± 0.2% |
| Salt: | 0.7% ± 0.1% |

The taste profile was comparable for all three samples: mildly sour, creamy, minimally bitter aftertaste (like quarg). Firmness was measured at 10°C after 1 week cold storage with a texture analyser. Surprisingly, the inventive samples made with acid whey showed a firmer texture, as shown in Figure 4.

## Claims

1. A method for the manufacture of a cream cheese, the method comprising:
providing a milk- and cream-containing dairy composition;
fermenting the milk- and cream-containing dairy composition to form a mixture of curds and whey;
forming a concentrated mixture by removing at least an aqueous portion from the mixture of curds and whey;
forming a cream cheese from the concentrated mixture;
the method further comprising obtaining a retentate by ultrafiltrating and/or microfiltrating a mixture of skimmed milk and an acidic aqueous by-product of a cheese-making process, and:
a) supplementing the milk- and cream-containing dairy composition with at least a portion of the retentate; and/or
b) supplementing the concentrated mixture with at least a portion of the retentate.

2. The method according to claim 1, wherein the aqueous portion comprises whey, and/or
wherein the acidic aqueous by-product of a cheese-making process is an acid whey.

3. The method according to claim 1 or claim 2, wherein the method comprises the step of a) supplementing the milk- and cream-containing dairy composition with at least a portion of the retentate, and wherein
(i) the milk- and cream-containing dairy composition has a ratio of milk to cream of from 1:2 to 2:1, preferably of about 1:1; and/or
(ii) the cream cheese has a total solids content of from 30 to 45 wt%, preferably from 32 to 38 wt%; and/or
(iii) the cream cheese has a fat content of from 15 to 30 wt%, preferably from 20 to 25 wt%.

4. The method according to claim 1 or claim 2, wherein the method comprises the step of
b) supplementing the concentrated mixture with at least a portion of the retentate, and wherein
(i) the milk- and cream-containing dairy composition has a ratio of milk to cream of from 7:1 to 10:1, preferably of from 8:1 to 9:1; and/or
(ii) the cream cheese has a total solids content of from 20 to 35 wt%, preferably from 24 to 28 wt%; and/or
(iii) the cream cheese has a fat content of from 8 to 20 wt%, preferably from 10 to 15 wt%.

5. The method according to any of the preceding claims, wherein the method comprises the step of
b) supplementing the concentrated mixture with at least a portion of the retentate,
wherein said at least a portion of the retentate is fermented.

6. The method according to any of the preceding claims, wherein the milk- and cream-containing dairy composition is pasteurised and/or homogenised prior to the step of fermenting the milk- and cream-containing dairy composition.

7. The method according to any of the preceding claims, wherein the step of removing at least an aqueous portion from the mixture of curds and acid whey comprises subjecting the mixture of curds and whey to centrifugation or membrane filtration.

8. The method according to any of the preceding claims, wherein the step of forming a cream cheese from the concentrated mixture comprises pasteurising and/or homogenising and/or texturising the concentrated mixture.

9. The method according to any of the preceding claims, wherein the step of texturizing the concentrated mixture is carried out for a period of 10-80 minutes, preferably 15-70 minutes, more preferably from 30-60 minutes and most preferably from 40-50 minutes, and/or wherein the step of texturizing the concentrated mixture is carried out at a temperature of 70-85 ºC, preferably 73-80 ºC and more preferably about 75 ºC.

10. The method according to any of the preceding claims, wherein, in the step of forming a cream cheese from the concentrated mixture, stabilisers and/or salt are added to the concentrated mixture, preferably wherein the stabilisers are selected from the group consisting of carob bean gum, carrageenan, locust bean gum, alginate, xanthan, gelatine, gum arabic, agar-agar, pectin, cellulose gum, carboxy methyl cellulose, and mixtures of two or more thereof.

11. The method according to any of the preceding claims, wherein at least a portion of the acidic aqueous by-product of a cheese manufacturing process is the aqueous portion obtained from the step of forming a concentrated mixture.

12. The method according to any of the preceding claims, wherein the mixture of skimmed milk and an acidic aqueous by-product of a cheese manufacturing process has a ratio of skimmed milk to acidic aqueous by-product of from 1:1 to 10:1, preferably from 2:1 to 3:1, more preferably about 7:3.

13. The method according to any of the preceding claims, wherein the mixture of skimmed milk and an acidic aqueous by-product of a cheese manufacturing process has a pH of from 5.5 to 6.5, more preferably from 5.8 to 6.2, and still more preferably about 6.0.

14. The method according to any of the preceding claims, wherein a solids content of the retentate is increased relative to the solids content prior to ultrafiltration and/or microfiltration by from 100% to 400%, preferably by from 200% to 300%, more preferably by from 330 to 370%, and most preferably by about 350%.

15. The method according to any of the preceding claims, wherein the method further comprises packaging the cream cheese.

## Patentansprüche

1. Verfahren zur Herstellung eines Frischkäses, wobei das Verfahren Folgendes umfasst:
Bereitstellen einer milch- und rahmhaltigen Milchzusammensetzung;
Fermentieren der milch- und rahmhaltigen Milchzusammensetzung, um eine Mischung von Käsebruch und Molke zu bilden;
Bilden einer konzentrierten Mischung durch Entfernen mindestens eines wässrigen Anteils aus der Mischung von Käsebruch und Molke;
Bilden eines Frischkäses aus der konzentrierten Mischung;
wobei das Verfahren ferner das Erhalten eines Retentats durch Ultrafiltration und/oder Mikrofiltration einer Mischung aus entrahmter Milch und einem sauren, wässrigen Nebenprodukt eines Käseherstellungsprozesses umfasst, und:
a) Ergänzen der milch- und rahmhaltigen Milchzusammensetzung mit mindestens einem Anteil des Retentats; und/oder
b) Ergänzen der konzentrierten Mischung mit mindestens einem Anteil des Retentats.

2. Verfahren nach Anspruch 1, wobei der wässrige Anteil Molke umfasst, und/oder
wobei das saure, wässrige Nebenprodukt eines Käseherstellungsprozesses eine Sauermolke ist.

3. Verfahren nach Anspruch 1 oder Anspruch 2, wobei das Verfahren den Schritt des a) Ergänzens der milch- und rahmhaltigen Milchzusammensetzung mit mindestens einem Anteil des Retentats umfasst, und wobei
(i) die milch- und rahmhaltige Milchzusammensetzung ein Verhältnis von Milch zu Rahm von 1:2 bis 2:1, vorzugsweise von etwa 1:1 aufweist; und/oder
(ii) der Frischkäse einen Gesamtfeststoffgehalt von 30 bis 45 Gew.-%, vorzugsweise von 32 bis 38 Gew.-% aufweist; und/oder
(iii) der Frischkäse einen Fettgehalt von 15 bis 30 Gew.-%, vorzugsweise von 20 bis 25 Gew.-% aufweist.

4. Verfahren nach Anspruch 1 oder Anspruch 2, wobei das Verfahren den folgenden Schritt umfasst
b) Ergänzen der konzentrierten Mischung mit mindestens einem Anteil des Retentats, und wobei
(i) die milch- und rahmhaltige Milchzusammensetzung ein Verhältnis von Milch zu Rahm von 7:1 bis 10:1, vorzugsweise von 8:1 bis 9:1 aufweist; und/oder
(ii) der Frischkäse einen Gesamtfeststoffgehalt von 20 bis 35 Gew.-%, vorzugsweise von 24 bis 28 Gew.-% aufweist; und/oder
(iii) der Frischkäse einen Fettgehalt von 8 bis 20 Gew.-%, vorzugsweise von 10 bis 15 Gew.-% aufweist.

5. Verfahren nach einem der vorstehenden Ansprüche, wobei das Verfahren den folgenden Schritt umfasst
b) Ergänzen der konzentrierten Mischung mit mindestens einem Anteil des Retentats,
wobei der mindestens eine Anteil des Retentats fermentiert wird.

6. Verfahren nach einem der vorstehenden Ansprüche, wobei die milch- und rahmhaltige Milchzusammensetzung vor dem Schritt des Fermentierens der milch- und rahmhaltigen Milchzusammensetzung pasteurisiert und/oder homogenisiert wird.

7. Verfahren nach einem der vorstehenden Ansprüche, wobei der Schritt des Entfernens mindestens eines wässrigen Anteils aus der Mischung von Käsebruch und Sauermolke das Unterziehen der Mischung von Käsebruch und Sauermolke einer Zentrifugation oder Membranfiltration umfasst.

8. Verfahren nach einem der vorstehenden Ansprüche, wobei der Schritt des Bildens eines Frischkäses aus der konzentrierten Mischung das Pasteurisieren und/oder Homogenisieren und/oder Texturieren der konzentrierten Mischung umfasst.

9. Verfahren nach einem der vorstehenden Ansprüche, wobei der Schritt des Texturierens der konzentrierten Mischung für einen Zeitraum von 10 bis 80 Minuten, vorzugsweise 15 bis 70 Minuten, mehr bevorzugt von 30 bis 60 Minuten und am meisten bevorzugt 40 bis 50 Minuten ausgeführt wird, und/oder wobei der Schritt des Texturierens der konzentrierten Mischung bei einer Temperatur von 70 bis 85 °C, vorzugsweise 73 bis 80 °C und mehr bevorzugt etwa 75 °C ausgeführt wird.

10. Verfahren nach einem der vorstehenden Ansprüche, wobei in dem Schritt des Bildens eines Frischkäses aus der konzentrierten Mischung Stabilisatoren und/oder Salz zu der konzentrierten Mischung hinzugegeben werden, wobei die Stabilisatoren vorzugsweise ausgewählt sind aus der Gruppe bestehend aus Carubenmehl, Carrageenan, Johannisbrotkernmehl, Alginat, Xanthan, Gelatine, Gummiarabikum, Agar-Agar, Pektin, Cellulosegummi, Carboxylmethylcellulose und Mischungen von zwei oder mehreren davon.

11. Verfahren nach einem der vorstehenden Ansprüche, wobei mindestens ein Anteil des sauren, wässrigen Nebenprodukts eines Käseherstellungsprozesses der wässrige Anteil ist, der aus dem Schritt des Bildens einer konzentrierten Mischung erhalten wird.

12. Verfahren nach einem der vorstehenden Ansprüche, wobei die Mischung aus entrahmter Milch und einem sauren, wässrigen Nebenprodukt eines Käseherstellungsprozesses ein Verhältnis von entrahmter Milch zu saurem, wässrigen Nebenprodukt von 1:1 bis 10:1, vorzugsweise von 2:1 bis 3:1, mehr bevorzugt von etwa 7:3, aufweist.

13. Verfahren nach einem der vorstehenden Ansprüche, wobei die Mischung aus entrahmter Milch und einem sauren, wässrigen Nebenprodukt eines Käseherstellungsprozesses einen pH-Wert von 5,5 bis 6,5, mehr bevorzugt von 5,8 bis 6,2, und noch mehr bevorzugt von etwa 6,0, aufweist.

14. Verfahren nach einem der vorstehenden Ansprüche, wobei ein Feststoffgehalt des Retentats in Bezug auf den Feststoffgehalt vor der Ultrafiltration und/oder Mikrofiltration um von 100 % bis 400 %, vorzugsweise um von 200 % bis 300 %, mehr bevorzugt um von 330 bis 370 %, und am meisten bevorzugt um etwa 350 % erhöht wird.

15. Verfahren nach einem der vorstehenden Ansprüche, wobei das Verfahren ferner das Verpacken des Frischkäses umfasst.

## Revendications

1. Procédé de fabrication d'une crème de fromage, le procédé comprenant :
la fourniture d'une composition laitière contenant du lait et de la crème ;
la fermentation de la composition laitière contenant du lait et de la crème pour former un mélange de lait caillé et de lactosérum ;
la formation d'un mélange concentré en éliminant au moins une partie aqueuse du mélange de lait caillé et de lactosérum ;
la formation d'une crème de fromage à partir du mélange concentré ;
le procédé comprenant en outre l'obtention d'un rétentat par ultrafiltration et/ou microfiltration d'un mélange de lait écrémé et d'un sous-produit aqueux acide d'un processus de fabrication de fromage, et :
a) l'enrichissement de la composition laitière contenant du lait et de la crème avec au moins une partie du rétentat ; et/ou
b) l'enrichissement du mélange concentré avec au moins une partie du rétentat.

2. Procédé selon la revendication 1, dans lequel la partie aqueuse comprend du lactosérum, et/ou
dans lequel le sous-produit aqueux acide d'un processus de fabrication de fromage est un lactosérum acide.

3. Procédé selon la revendication 1 ou la revendication 2, où le procédé comprend l'étape consistant à a) enrichir la composition laitière contenant du lait et de la crème avec au moins une partie du rétentat, et dans lequel
(i) la composition laitière contenant du lait et de la crème a un rapport de lait à crème allant de 1 :2 à 2:1, de préférence d'environ 1:1 ; et/ou
(ii) la crème de fromage a une teneur totale en matières solides allant de 30 à 45 % en poids, de préférence de 32 à 38 % en poids ; et/ou
(iii) la crème de fromage a une teneur en matières grasses allant de 15 à 30 % en poids, de préférence de 20 à 25 % en poids.

4. Procédé selon la revendication 1 ou la revendication 2, où le procédé comprend l'étape consistant à
b) enrichir le mélange concentré avec au moins une partie du rétentat, et dans lequel
(i) la composition laitière contenant du lait et de la crème a un rapport de lait à crème allant de 7:1 à 10:1, de préférence d'environ 8:1 à 9:1 ; et/ou
(ii) la crème de fromage a une teneur totale en matières solides allant de 20 à 35 % en poids, de préférence de 24 à 28 % en poids ; et/ou
(iii) la crème de fromage a une teneur en matières grasses allant de 8 à 20 % en poids, de préférence de 10 à 15 % en poids.

5. Procédé selon l'une quelconque des revendications précédentes, où le procédé comprend l'étape consistant à
b) enrichir le mélange concentré avec au moins une partie du rétentat, dans lequel ladite au moins une partie du rétentat est fermentée.

6. Procédé selon l'une quelconque des revendications précédentes, dans lequel la composition laitière contenant du lait et de la crème est pasteurisée et/ou homogénéisée avant l'étape de fermentation de la composition laitière contenant du lait et de la crème.

7. Procédé selon l'une quelconque des revendications précédentes, dans lequel l'étape d'élimination d'au moins une partie aqueuse du mélange de lait caillé et de lactosérum acide comprend le fait de soumettre le mélange de lait caillé et de lactosérum à une centrifugation ou à une filtration sur membrane.

8. Procédé selon l'une quelconque des revendications précédentes, dans lequel l'étape de formation d'une crème de fromage à partir du mélange concentré comprend la pasteurisation et/ou l'homogénéisation et/ou la texturation du mélange concentré.

9. Procédé selon l'une quelconque des revendications précédentes, dans lequel l'étape de texturation du mélange concentré est effectuée pendant une période de 10 à 80 minutes, de préférence 15 à 70 minutes, plus préférablement de 30 à 60 minutes et le plus préférablement de 40 à 50 minutes, et/ou dans lequel l'étape de texturation du mélange concentré est effectuée à une température de 70 à 85 °C, de préférence 73 à 80 °C et plus préférablement environ 75 °C.

10. Procédé selon l'une quelconque des revendications précédentes, dans lequel, dans l'étape de formation d'une crème de fromage à partir du mélange concentré, des stabilisants et/ou un sel sont ajoutés au mélange concentré, de préférence dans lequel les stabilisants sont choisis dans le groupe constitué de gomme de caroube, carraghénane, farine de graines de caroube, alginate, xanthane, gélatine, gomme arabique, agar-agar, pectine, gomme cellulosique, carboxyméthylcellulose, et des mélanges de deux ou plus de deux de ceux-ci.

11. Procédé selon l'une quelconque des revendications précédentes, dans lequel au moins une partie du sous-produit aqueux acide d'un processus de fabrication de fromage est la partie aqueuse obtenue à partir de l'étape de formation d'un mélange concentré.

12. Procédé selon l'une quelconque des revendications précédentes, dans lequel le mélange de lait écrémé et d'un sous-produit aqueux acide d'un processus de fabrication de fromage a un rapport de lait écrémé au sous-produit aqueux acide allant de 1:1 à 10:1, de préférence de 2:1 à 3:1, plus préférablement environ 7:3.

13. Procédé selon l'une quelconque des revendications précédentes, dans lequel le mélange de lait écrémé et d'un sous-produit aqueux acide d'un processus de fabrication de fromage a un pH allant de 5,5 à 6,5, plus préférablement de 5,8 à 6,2, et encore plus préférablement environ 6,0.

14. Procédé selon l'une quelconque des revendications précédentes, dans lequel une teneur en matières solides du rétentat est augmentée par rapport à la teneur en matières solides avant ultrafiltration et/ou microfiltration à raison de 100 % à 400 %, de préférence de 200 % à 300 %, plus préférablement de 330 % à 370 %, et le plus préférablement d'environ 350 %.

15. Procédé selon l'une quelconque des revendications précédentes, où le procédé comprend en outre l'emballage de la crème de fromage.
